# EUROPÄISCHE PATENTSCHRIFT

(11) **EP 3 693 226 B1**
(45) Veröffentlichungstag und Bekanntmachung des Hinweises auf die Patenterteilung: **30.04.2025**
(21) Anmeldenummer: 20156131.3
(22) Anmeldetag: 07.02.2020
(51) Int. Cl.: B60R 16/02, H01B 13/012, H02G 15/18

(54) **VERFAHREN ZUM UMMANTELN VON LANGESTRECKTEM GUT INSBESONDERE LEITUNGEN UND KABELSTRANG**
METHOD FOR COVERING ELONGATED PRODUCTS, IN PARTICULAR CABLES, AND WIRE HARNESS
PROCÉDÉ DE GAINAGE DE PRODUITS ALLONGÉS, EN PARTICULIER CONDUITES, ET HARNACHEMENT DES FILS

(30) Priorität: 08.02.2019 DE 102019103121
(43) Veröffentlichungstag der Anmeldung: 12.08.2020
(73) Patentinhaber: tesa SE, 22848 Norderstedt (DE)
(72) Erfinder: Klingeberg, Kerstin, 22527 Hamburg (DE); Simonis, Heike, 22299 Hamburg (DE); Guldbrandsen, Lars, 22885 Barsbüttel (DE)
(74) Vertreter: tesa SE

(56) Entgegenhaltungen:
- EP-A1- 0 045 213
- EP-A1- 0 326 928
- EP-A2- 0 260 553
- DE-A1- 102014 109 141
- DE-A1- 102015 108 365
- DE-A1- 19 732 958
- JP-A- 2015 095 909
- JP-A- H08 216 253
- US-A- 6 005 191
- TAGHLEEF: "Nativa NTSS", 26 November 2018 (2018-11-26), pages 1 - 2, XP055704158, Retrieved from the Internet <URL:https://www.ti-films.com/documents/61a6dc2f-713a-4966-a39f-723e071d4155> [retrieved on 20200611]

## Beschreibung

Die Erfindung betrifft ein Klebeband und ein Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, und der EP 2 497 805 A1 bekannt.

Derzeitige mit Klebeband umwickelte Kabelsätze sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Nachteilig bei diesem Verfahren ist die hohe Aushärtungstemperatur, die bei der Montage von Kabelsträngen während des Fertigungsprozesses beispielsweise in der Automobilindustrie wenig praktikabel ist, insbesondere weil die oft aus PVC gefertigten Kabelisolierungen beschädigt werden können. Folglich werden bislang Kabelpläne in vorgefertigen Spritzgussformen verlegt. Dies ist mit hohem Fertigungsaufwand verbunden.

Daher sind Bänder wünschenswert, die bei höchstens 130°C, bevorzugt höchstens 120°C, weiter bevorzugt zwischen 60°C und 100°C versteifen, damit die Umhüllung von Klebebändern in den Fertigungsprozess der Kabelbäume bzw. Kabelpläne integriert werden kann. Die Klebebänder müssen nach dem Aushärten die geforderten Anforderungen an Formstabilität aufweisen. Andererseits dürfen die Klebemassen nicht schon bei der Lagerung aushärten, da sie ansonsten nicht mehr verwendbar sind. Schließlich soll die Aushärtung innerhalb der Taktzeit des Herstellungsprozesses (ca. 6 min) stattfinden. Ein entsprechendes Verfahren für eine Polycarbodiimid-Folie ist aus der JP H 216253 A bekannt

Aufgabe der vorliegenden Erfindung ist es, ein Verfahren zum Ummanteln von langgestrecktem Gut sowie ein mit dem Verfahren erhältliches Produkt zur Verfügung zu stellen.

Zur Lösung der technischen Probleme wird gemäß Anspruch 1 ein Verfahren zum Ummanteln von langgestrecktem Gut wie insbesondere Leitungen oder Kabelsätzen vorgeschlagen, wobei eine verstreckte Schrumpffolie in einer Schraubenlinie um das langgestreckte Gut geführt wird oder das langgestreckte Gut in axialer Richtung von der verstreckten Schrumpffolie umhüllt wird, das langgestreckte Gut mitsamt der umhüllenden Schrumpffolie in die gewünschte Anordnung, insbesondere in den Kabelsatzplan gebracht wird, das langgestreckte Gut in dieser Anordnung gehalten wird und die Schrumpffolie durch die Zufuhr von thermischer Energie bei einer Temperatur von bis zu 130°C zum Schrumpfen gebracht wird. Bevorzugt liegt die Schrumpftemperatur zwischen 100°C und 120°C.

Gemäß einer Ausführungsform der Erfindung handelt es sich bei dem langgestreckten Gut um einen Kabelstrang, der ein Bündel aus mehreren Kabeln, wie 3 bis 1000 Kabeln, bevorzugt 10 bis 500 Kabeln, insbesondere zwischen 50 und 300 Kabeln umfasst.

In einer Ausführungsform der Erfindung wird eine Schrumpffolie mit einem Längsschrumpf von 30% bis 75%, bevorzugt 50% bis 70% verwendet. Der Schrumpf in Querrichtung spielt nur eine untergeordnete Rolle. Das Schrumpfverhältnis (längs/quer) liegt daher bevorzugt zwischen 80:20 und 50:50. In einer weiteren Ausführungsform der Erfindung wird eine Schrumpffolie mit einer Schrumpfkraft von 1,1 N bis 1,8 N verwendet.

Die Schrumpffolie kann eine Einschicht- oder Mehrschichtfolie sein. In einer weiteren Ausführungsform der Erfindung weist die Schrumpffolie eine Zugfestigkeit von 30 N/mm² bis 1500 N/mm², bevorzugt von 100 N/mm² bis 500 N/mm² in Längsrichtung auf. Die Zugfestigkeit wird bestimmt nach DIN-EN-ISO 527-3/2/300.

In einer Ausführungsform der Erfindung wird die Schrumpffolie zunächst mindestens in Längsrichtung orientiert, vorzugsweise bei einer Temperatur von 10°C bis 60°C unterhalb des Schmelzpunkts der Schrumpffolie, bevor sie das langgestreckte Gut umhüllt. Es ist weiter bevorzugt, dass die Schrumpffolien mit einer Streckrate von 1:1,5 bis 1:10 mindestens in Längsrichtung orientiert werden.

Schrumpffolien sind Polymerfolien, die bei Wärmeanwendung in einer oder beiden Richtungen schrumpfen. Sie werden in großem Umfang als Verpackungs- und Umhüllungsmaterialien sowohl für große als auch kleine Produkte (z.B. Paletten für die Industrie, Flaschen, Magazine usw.) verwendet, wobei dickere Folien im allgemeinen für größere Gegenstände und dünnere Folien für kleinere Gegenstände verwendet werden.

In einer weiteren Ausführungsform der Erfindung umfasst die Schrumpffolie ein Polymer, das ausgewählt ist aus orientiertem Polystyrol (OPS-Folien) oder aus Polymilchsäuren (PLA-Folien). Nicht erfindungsgemäße Ausführungsformen sind Polyvinylchlorid (PVC-Folien), Polyethylen (PE-Folien), wie Polyethylen mit niedriger Dichte (LDPE) wie in der DE 60 304 353 T2 beschrieben, auf die hier Bezug genommen wird, oder Polyethylen mit mittlerer Dichte (MDPE), Ethylencopolymeren, insbesondere Ethylen-α-Olefin-Copolymeren, Polyestern wie Polyethylenterephthalat (PET-Folien). Die Schrumpffolien weisen bevorzugt eine Dicke von 20 µm bis 100 µm, bevorzugter von 30 µm bis 60 µm auf.

Eine geeignete Polymilchsäure-Schrumpffolie ist beispielsweise unter dem Handelsnamen Nativia^{®} NTSS von Taghleef Industries, Vereinigte Arabische Emirate, erhältlich.

Erfindungsgemäß umfasst die Schrumpffolie zusätzlich noch einen Haftklebstoff, so dass das Band nach dem Umwickeln und vor dem Schrumpfen auf dem langgestreckten Gut fixiert ist.

Der **Haftklebstoff** ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Gemäß einer Ausführungsform der Erfindung wird als Haftklebstoff eine Strukturklebemasse (Konstruktionsklebstoff, Montageklebstoff) verwendet (siehe Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: *"bonding agents used for transferring required loads between adherends exposed to Service environments typical for the structure involved"*). Es sind also Klebstoffe für chemisch und physikalisch hoch beanspruchbare Klebungen, die im ausgehärteten Zustand zur Verfestigung der geklebten Substrate beitragen und zur Herstellung von Konstruktionen aus Metallen, Keramik, Beton, Holz oder verstärkten Kunststoffen verwendet werden. Die Strukturklebstoffe basieren insbesondere auf Reaktionsklebstoffen (Phenolharze, Epoxidharze, Polyimide, Polyurethane und andere).

Bekannt sind Haftklebstoffe, wie sie in den veröffentlichten europäischen Patentanmeldungen EP 2 520 627 A1, EP 2 522 705 A1, EP 2 520 628 A1, EP 2 695 926 A1, EP 2 520 629 A1 und EP 3 433 330 A1 beschrieben werden, auf die hier diesbezüglich Bezug genommen wird.

Gemäß einer ersten Ausführungsform liegt die Haftklebemasse in Form einer getrockneten Polymerdispersion vor, wobei das Polymer aufgebaut ist aus: 5 bis 25 Gew.-%, vorzugsweise 10 bis 22 Gew.-% Ethylen, 30 bis 69 Gew.-%, vorzugsweise 40 bis 60 Gew.-% Alkylacrylatester mit C₄- bis C₁₂-Alkylresten, 20 bis 55 Gew.-%, vorzugsweise 28 bis 38 Gew.-% Vinylacetat, 0 bis 10 Gew.-% andere ethylenisch ungesättigte Verbindungen und die Haftklebemasse zwischen 15 und 100 Gewichtsteile eines Klebrigmachers (bezogen auf die Masse der getrockneten Polymerdispersion) enthält, wie in EP 2 520 627 A1 beschrieben. Bevorzugt handelt es sich bei dem Alkylacrylatester um n-Butylacrylat und/oder 2-Ethylhexyl-acrylat. Andere ethylenisch ungesättigte Verbindungen umfassen Alkyl(meth)acrylate, bevorzugt C₁- bis C₂₀-Alkyl(meth)acrylate mit Ausnahme der die Alkylacrylatester mit C₄- bis C₁₂-Alkylresten bildenden Monomere, aromatische Vinylmonomere wie Styrol, α-Methylstyrol und Vinyltoluol, C₁- bis C₁₀-Hydroxyalkyl(meth)acrylate wie insbesondere Hydroxyethyl- oder Hydroxypropyl(meth)acrylat, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 3 bis 8 Kohlenstoffatomen wie Propen, Butadien, Isopren, 1-Hexen oder 1-Octen oder deren Mischungen. Darüber hinaus können dem Polymer als Monomer weiterhin vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Monomere (e) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantri-acrylat und Tetraacrylate wie Pentaerythritoltetraacrylat. Die Polymerdispersion wird hergestellt durch das Verfahren der Emulsionspolymerisation der genannten Komponenten. Ausführliche Beschreibungen der Einsatzstoffe sowie der Herstellungsverfahren findet man in EP 0 017 986 B1 sowie EP 0 185 356 B1.

Gemäß einer weiteren Ausführungsform liegt die Haftklebemasse in Form einer getrockneten Polymerdispersion vor, wobei das Polymer aufgebaut ist aus: (a) 90 bis 99 Gew.-% n-Butylacrylat und/oder 2-Ethylhexylacrylat, bevorzugt 2-Ethylhexylacrylat, (b) 0 bis 10 Gew.-% eines ethylenisch ungesättigten Monomers mit einer Säure- oder Säureanhydridfunktion, (c) 10 bis 1 Gew.-% eines oder mehreren von (a) und (b) verschiedenen ethylenisch ungesättigten monofunktionellen Monomeren, wie Acrylnitril und/oder Methacrylnitril, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 522 705 A1 beschrieben. Eine besonders bevorzugte Ausführungsform der Erfindung umfasst also eine Mischung aus 2-Ethylhexylacrylat als Monomer (a) und Acrylnitril als Monomer (c). Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten Polymerdispersion vor, wobei das Polymer aufgebaut ist aus: (a) 40 bis 90 Gew.-% n-Butylacrylat und/oder 2-Ethylhexylacrylat, bevorzugt (b) 2-Ethylhexyl-acrylat, 0 bis 10 Gew.-% eines ethylenisch ungesättigten Monomers mit einer Säure- oder Säureanhydridfunktion, (c) 60 bis 10 Gew.-% eines oder mehreren von (a) und (b) verschiedenen ethylenisch ungesättigten monofunktionellen Monomeren, (d) 0 bis 1 Gew.-% eines di- oder mehrfunktionellen Monomers und die Haftklebemasse zwischen 15 und 100 Gewichtsteile eines Klebrigmachers (bezogen auf die Masse der getrockneten Polymerdispersion) enthält, wie in EP 2 520 628 A1 beschrieben. Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden. Unter Monomere (c) fallen Alkyl(meth)acrylate, bevorzugt C₁- bis C₂₀-Alkyl(meth)acrylate mit Ausnahme der (a) bildenden Monomere, aromatische Vinylmonomere wie Styrol, α-Methylstyrol und Vinyltoluol, C₁- bis C₁₀-Hydroxyalkyl-(meth)acrylate wie insbesondere Hydroxyethyl- oder Hydroxy-propyl(meth)acrylat, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen. Besonders bevorzugt ist Ethylacrylat. Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Die Polymerdispersion wird hergestellt durch das Verfahren der Emulsionspolymerisation der genannten Komponenten. Beschreibungen dieses Verfahrens werden zum Beispiel gegeben in der EP 1 378 527 B1 beschrieben.

Gemäß einer weiteren Ausführungsform liegt die Haftklebemasse in Form einer getrockneten und Elektronenstrahl (ESH) vernetzten polymeren Acrylatdispersion, insbesondere einer wässrigen Acrylatdisperion, bevorzugt mit einem Gelwert von größer gleich 40 %, bestimmt mittels Soxhlet-Extraktion, wobei die polymere Acrylatdispersion Polymere umfasst, die aufgebaut sind aus (a) monomeren Acrylaten und optional (b) ethylenisch ungesättigten Comonomeren, die keine Acrylate sind, wobei die Haftklebemasse zwischen 15 und 100 Gewichtsteile eines Klebrigmachers (bezogen auf die Masse der getrockneten polymeren Dispersion) enthält, wie in EP 2 695 926 A1 beschrieben.

Gemäß einer weiteren Ausführungsform weist die Haftklebemasse eine Scherviskosität ei einer Temperatur von 25°C während der Beschichtung aus Dispersion 200 bis 100.000 Pa·s bei einer Schergeschwindigkeit von 10⁻² s⁻¹ und 0,1 bis 10 Pa·s bei einer Schergeschwindigkeit von 100 s⁻¹ auf. Die Haftklebemasse besteht vorzugsweise aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind. Acrylathaftklebemassen sind typischerweise radikalisch polymerisierte Copolymere aus Acrylsäurealkylestern oder Methacrylsäurealkylestern von C₁- bis C₂₀-Alkoholen wie zum Beispiel Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)-acrylat, n-Decyl(meth)acrylat, n-Dodecyl(meth)acrylat, Tetradecyl-(meth)acrylat, Lauryl(meth)acrylat, Oleyl(meth)acrylat, Palmityl-(meth)acrylat und Stearyl(meth)acrylat neben weiteren (Meth)acrylsäureestern wie Isobornyl(meth)acrylat, Benzyl(meth)-acrylat, Phenyl(meth)acrylat und 2-Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethyl-methylitaconat. Ebenfalls fallen vinylaromatische Monomere wie zum Beispiel Styrol, Vinyltoluol, Methylstyrol, n-Butylstyrol, Decylstyrol darunter, wie in der EP 2 520 629 A1 beschrieben.

Gemäß einer weiteren Ausführungsform liegt die Haftklebemasse in Form einer getrockneten Polymerdispersion vor, wobei das Polymer aufgebaut ist aus: (a) 95,0 bis 100,0 Gew.-% n-Butylacrylat und/oder 2-Ethylhexylacrylat und (b) 0,0 bis 5,0 Gew.-% eines ethylenisch ungesättigten Monomers mit einer Säure- oder Säureanhydridfunktion, wie in der EP 2 433 330 A1 beschrieben. Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 98,0 bis 99,0 Gew.-% n-Butylacrylat und/oder 2-Ethylhexylacrylat und 1,0 bis 2,0 Gew.-% eines ethylenisch ungesättigten Monomers mit einer Säure- oder Säureanhydridfunktion. Neben den aufgeführten Acrylatpolymeren können der Haftklebemasse neben gegebenenfalls vorhandenen Restmonomeren zusätzlich die weiter unten erwähnten Klebrigmacher und/oder Zuschlagstoffe wie Lichtschutz- oder Alterungsschutzmitteln in den ebenfalls unten genannten Mengen zugesetzt werden. Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Gemäß einer weiteren Ausführungsform liegt die Haftklebemasse in Form einer getrockneten und Polymerdispersion vor, wobei das Polymer aufgebaut ist aus: (a) 97,0 bis 98,0 Gew.-% n-Butylacrylat und/oder 2-Ethylhexylacrylat, (b) 2,0 bis 3,0 Gew.-% eines ethylenisch ungesättigten Monomers mit einer Säure- oder Säureanhydrid-funktion. Vorzugsweise besteht das Polymer aus 97,2 bis 97,7 Gew.-% n-Butylacrylat und/oder 2-Ethylhexylacrylat, beborzugt n-Butylacrylat, und 2,3 bis 2,8 Gew.-% eines ethylenisch ungesättigten Monomers mit einer Säure- oder Säureanhydridfunktion. Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Gemäß einer weiteren Ausführungsform sind die Haftklebemassen verntzerfrei. "Vernetzerfrei" im Sinne dieser Erfindung bedeutet, dass der Haftklebemasse keine zur Vernetzung befähigten Verbindungen zugesetzt werden. Wie hier verwendet, steht der Begriff Vernetzer für chemische Verbindungen, die imstande sind, Molekülketten miteinander zu verbinden, damit sich aus den zweidimensionalen Strukturen über Ausbildung intermolekularer Brücken dreidimensional-vernetzte Strukturen bilden können. Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

Vorteilhaft liegt der Masseauftrag der auf den Träger aufgebrachten und/oder in den Träger eingebrachten Klebemasse zwischen 30 g/m² und 300 g/m², weiter vorteilhaft zwischen 40 g/m² und 200 g/m², besonders vorteilhaft zwischen 50 g/m² und 130 g/m². Das Einbringen in den Träger, insbesondere Vlies- oder Gewebeträger kann durch Tränken erfolgen.

In einer Ausführungsform hat die Schrumpffolie eine Breite von 10 mm bis 50 mm, bevorzugt 15 mm bis 30 mm, insbesondere 20±2 mm.

Die Schrumpffolie wird vorzugsweise spiralförmig mit einer Überlappung von 30% bis 70%, bevorzugter 40 bis 50%, insbesondere etwa 50% um das langgestreckte Gut umwickelt.

### Beispiele:

### Beispiel 1 - Herstellung einer mit Haftklebemasse beschichteten Schrumpffolie

Eine wässrige, polymere Dispersionsklebmasse aus 99 Gew.-%, bezogen auf das Gesamtgewicht des Polymers, 1-Butylacrylat-Monomer und 1 Gew.-% , bezogen auf das Gesamtgewicht des Polymers, Acrylsäure wird mittels Rakel auf einen silikonisierten Liner ausgestrichen und im Ofen mittels Temperaturprofil von 95°C bis 130°C getrocknet. Anschließend wird eine verstreckte, 50 µm dicke OPS-Folie der Firma RKW SE, Petersaurach, Deutschland, auf die Klebmasse kaschiert und zu einem Ballen gewickelt. Im letzten Schritt werden Handrollen mit einer Abmessung von 19 mm Breite und 15 Laufmeter konfektioniert.

### Beispiel 2 - Biegeprüfung zur Ermittlung der Steifigkeit

Ein Prüfmuster, bestehend aus 250 Einzelleitungen mit einem Leitungsquerschnitt von 0,35 mm², wurde mithilfe eines 5 cm breiten 3M Soft Cast-Band zu einem Musterleitungssatz gebündelt, so dass der Musterleitungssatz einen Durchmesser von 23±5 mm und eine Länge von 300±50 mm aufwies.

Der Musterleitungssatz wurde mit der verstreckten Schrumpffolie gemäß Beispiel 1 spiralförmig umwickelt, ein weiterer Musterleitungssatz wurde mit einer 20±2 mm breiten, verstreckten Nativia NTSS 40-Schrumpffolie spiralförmig umwickelt und ein weiterer Musterleitungssatz wurde mit einer verstreckten Petalabel Rigid PETG TDO G10F22-T52-Folie spiralförmig umwickelt, wobei ein Überlapp von 50% gewährleistet wurde. Anschließend wurde das versteifende Material mittels Zufuhr von Wärmeenergie bei einer Temperatur von 120°C geschrumpft. Ca. 3 Min nach der Aktivierung wurde die Endfestigkeit erreicht und das Muster konnte getestet werden.

Der geschrumpfte Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

### Bewertungskategorien 3-Punkt Biegeversuch:

- +: gut geeignet für die Anwendung (500-750 N)
- O: eingeschränkt geeignet für die Anwendung (400-500 N und 700-800 N)
- -: nicht geeignet für die Anwendung (< 400 und > 800 N)

Zum Vergleich wurde ein kommerziell erhältliches Klebeband, tesa^{®} 51036, dem gleichen Versuch unterworfen. Die Ergebnisse sind in der nachfolgenden Tabelle 1 aufgeführt.

### Beispiel 3 - C-Form-Prüfung zur Ermittlung der Steifigkeit bei unterschiedlichen Temperaturen

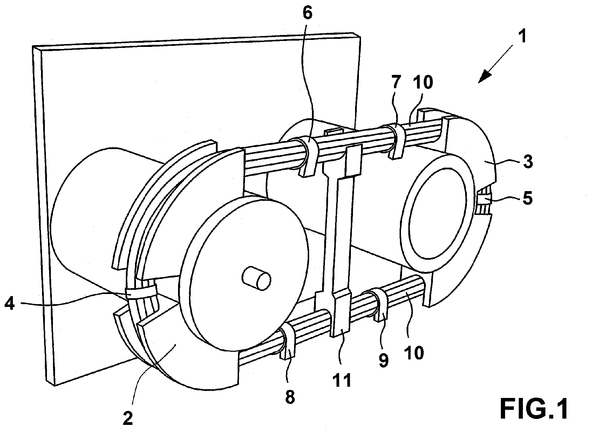

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Fig. 1) wird eine Kabelleitung (10) mit einem Leitungsquerschnitt von 0,35 mm² 100 mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in **Fig. 1** dargestellt.

Die Zahl der Kabelwicklungen beträgt 100. Es entsteht ein Musterleitungssatz mit einem Durchmesser von 15±5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210±10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden Klebeband (Breite 19 mm-20 mm) mit einer 50%igen Überlappung umwickelt. Dazu wird mit der Umwicklung an einem Kabelbinder (z.B. 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5)->(9)) des gegenüberliegenden Schenkels fortgeführt. Genauso wird auch an der anderen Seite, am anderen Halbkreissegment verfahren.

Die so präparierten Muster werden unter Anwendung von thermischer Energie (120°C) geschrumpft. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60°C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60°C) und das Gewicht entfernt. Nach einer Minute wird die Auslenkung erneut bestimmt (Rückstellverhalten 1 min bei RT bzw. 60°C). Nach einer Stunde wird die Auslenkung dann wieder bestimmt und notiert (Rückstellverhalten 1 h bei RT bzw. 60°C).

Die ermittelten Werte der C-Form-Verformung wurden in drei Kategorien eingestuft, gut geeignet für die Anwendung, eingeschränkt geeignet für die Anwendung und nicht geeignet für die Anwendung. Die Kategorien wurden wie folgt bewertet:

### Bewertungskategorien C-Form-Biegeversuch (Raumtemperatur):

- +: gut geeignet für die Anwendung (< 15% Auslenkung)
- O: eingeschränkt geeignet für die Anwendung (>15-30%)
- -: nicht geeignet für die Anwendung (>30%)

### Bewertungskategorien C-Form-Biegeversuch (60°C):

- +: gut geeignet für die Anwendung (< 25% Auslenkung)
- O: eingeschränkt geeignet für die Anwendung (>25-40%)
- -: nicht geeignet für die Anwendung (>40%)

### Bewertungskategorien C-Form-Biegeversuch (Rückstellverhalten bei RT und 60°C):

- +: gut geeignet für die Anwendung (< 10% Auslenkung)
- O: eingeschränkt geeignet für die Anwendung (10-30%)
- -: nicht geeignet für die Anwendung (>30%)

Zum Vergleich wurde ein kommerziell erhältliches Klebeband, tesa^{®} 51036, dem gleichen Versuch unterworfen. Die Ergebnisse sind ebenfalls in der nachfolgenden Tabelle 1 aufgeführt.

**Tabelle 1:**

| | 3-Punkt Biegeversuch | C-Form-Verformung bei RT | C-Form-Rückstellverhalten bei RT |
|---|---|---|---|
| OPS 50 | + | + | + |
| Nativia NTSS 40 | + | + | + |
| Rigid PETG TDO G10F22-T52 | - | - | - |
| tesa^{®} 51036 | - | - | - |

| | C-Form-Verformung bei 60°C | C-Form-Rückstellverhalten bei 60°C |
|---|---|---|
| OPS 50 | + | + |
| Nativia NTSS 40 | + | + |
| Rigid PETG TDO G10F22-T52 | - | - |
| tesa^{®} 51036 | - | - |

### Legende:

- +: gut geeignet für die Anwendung
- o: eingeschränkt geeignet für die Anwendung
- -: nicht geeignet für die Anwendung

## Patentansprüche

1. Verfahren zum Ummanteln von langgestrecktem Gut wie insbesondere Leitungen oder Kabelsätzen, wobei eine verstreckte Schrumpffolie in einer Schraubenlinie um das langgestreckte Gut geführt wird oder das langgestreckte Gut in axialer Richtung von der verstreckten Schrumpffolie umhüllt wird, das langgestreckte Gut mitsamt der umhüllenden Schrumpffolie in die gewünschte Anordnung, insbesondere in den Kabelsatzplan gebracht wird, das langgestreckte Gut in dieser Anordnung gehalten wird und die Schrumpffolie durch die Zufuhr von thermischer Energie bei einer Temperatur von bis zu 130°C zum Schrumpfen gebracht wird,
wobei die Schrumpffolie zusätzlich noch einen Haftklebstoff umfasst ,
**dadurch gekennzeichnet, dass**
das Polymer der Schrumpffolie ausgewählt ist aus orientiertem Polystyrol oder Polymilchsäuren.

2. Verfahren nach Anspruch 1, **dadurch gekennzeichnet, dass** die Schrumpffolie durch die Zufuhr von thermischer Energie bei einer Temperatur von 55°C bis zu 120°C zum Schrumpfen gebracht wird.

3. Verfahren nach einem der vorgehenden Ansprüche, **dadurch gekennzeichnet, dass** die Schrumpffolie mindestens in Längsrichtung orientiert wird, bevor sie das langgestreckte Gut umhüllt.

4. Verfahren nach Anspruch 3, **dadurch gekennzeichnet, dass** die Schrumpffolie bei einer Temperatur von 10°C bis 60°C unterhalb des Schmelzpunkts der Schrumpffolie orientiert wird.

5. Verfahren nach Anspruch 3 oder 4, **dadurch gekennzeichnet, dass** die Schrumpffolie mit einer Streckrate von 1:1,5 bis 1:10 mindestens in Längsrichtung orientiert wird.

6. Verfahren nach einem der vorgehenden Ansprüche, **dadurch gekennzeichnet, dass** die Schrumpffolie eine Breite von 10 mm bis 50 mm aufweist.

7. Verfahren nach einem der vorgehenden Ansprüche, **dadurch gekennzeichnet, dass** die Schrumpffolie spiralförmig mit einer Überlappung von 30% bis 70% um das langgestreckte Gut umwickelt wird.

## Claims

1. Method for jacketing elongate items, such as in particular lines or cable harnesses, wherein a stretched shrink film is run in a helical line around the elongate item or the elongate item is encapsulated by the stretched shrink film in an axial direction, the elongate item together with the encapsulating shrink film is put into the desired arrangement, in particular in the cable harness layout, the elongate item is held in this arrangement and the shrink film is made to shrink by supplying thermal energy at a temperature of up to 130°C, wherein the shrink film additionally also comprises an pressure-sensitive adhesive,
**characterized in that**
the polymer of the shrink film is selected from oriented polystyrene or polylactic acids.

2. Method according to Claim 1, **characterized in that** the shrink film is made to shrink by supplying thermal energy at a temperature of 55°C to 120°C.

3. Method according to either of the preceding claims, **characterized in that** the shrink film is oriented at least in the longitudinal direction before it encapsulates the elongate item.

4. Method according to Claim 3, **characterized in that** the shrink film is oriented at a temperature 10°C to 60°C below the melting point of the shrink film.

5. Method according to Claim 3 or 4, **characterized in that** the shrink film is oriented with a stretching rate of 1:1.5 to 1:10 at least in the longitudinal direction.

6. Method according to one of the preceding claims, **characterized in that** the shrink film has a width of 10 mm to 50 mm.

7. Method according to one of the preceding claims, **characterized in that** the shrink film is wrapped helically around the elongate item with an overlap of 30% to 70%.

## Revendications

1. Procédé de gainage de produits allongés, tels que notamment des lignes ou des faisceaux de câbles, dans lequel un film rétractable étiré est guidé en une hélice autour du produit allongé ou le produit allongé est enveloppé en direction axiale par le film rétractable étiré, le produit allongé est amené avec le film rétractable qui l'enveloppe dans l'agencement souhaité, notamment dans le plan du faisceau de câbles, le produit allongé est maintenu dans cet agencement et le film rétractable est amené à se rétracter par l'apport d'énergie thermique à une température de jusqu'à 130 °C, dans lequel le film rétractable comprend en outre un adhésif sensible à la pression,
**caractérisé en ce que**
le polymère du film rétractable est choisi parmi le polystyrène orienté ou les acides polylactiques.

2. Procédé selon la revendication 1, **caractérisé en ce que** le film rétractable est amené à se rétracter par l'apport d'énergie thermique à une température de 55 °C à 120 °C.

3. Procédé selon l'une quelconque des revendications précédentes, **caractérisé en ce que** le film rétractable est orienté au moins dans la direction longitudinale avant d'envelopper le produit allongé.

4. Procédé selon la revendication 3, **caractérisé en ce que** le film rétractable est orienté à une température de 10 °C à 60 °C en dessous du point de fusion du film rétractable.

5. Procédé selon la revendication 3 ou 4, **caractérisé en ce que** le film rétractable est orienté au moins dans la direction longitudinale à un taux d'étirage de 1:1,5 à 1:10.

6. Procédé selon l'une quelconque des revendications précédentes, **caractérisé en ce que** le film rétractable présente une largeur de 10 mm à 50 mm.

7. Procédé selon l'une quelconque des revendications précédentes, **caractérisé en ce que** le film rétractable est enroulé en spirale autour du produit allongé avec un chevauchement de 30 % à 70 %.
